(19) Europäisches Patentamt

European Patent Office

Office européen des brevets

(11) **EP 1 633 160 A1**

(12) **EUROPEAN PATENT APPLICATION**

(43) Date of publication:
08.03.2006 Bulletin 2006/10

(51) Int Cl.:
*H04Q 7/38* (2006.01)     *H04L 12/56* (2006.01)

(21) Application number: 04104296.1

(22) Date of filing: 07.09.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicant: **Nokia Corporation**
**02150 Espoo (FI)**

(72) Inventors:
• **Wigard, Jeroen**
  **9220, Aalborg (DK)**
• **Pedersen, Klaus**
  **9000, Aalborg (DK)**

• **Lootsma, Tako**
  **9000, Aalborg (DK)**
• **Stottrup, Michael**
  **9000, Aalborg (DK)**
• **Yu, Ling**
  **90650, Oulu (FI)**

(74) Representative: **Antila, Harri Jukka Tapani**
**Kolster Oy Ab,**
**P.O. Box 148,**
**Iso Roobertinkatu 23**
**00121 Helsinki (FI)**

Remarks:
Amended claims in accordance with Rule 86 (2) EPC.

(54) **Admission control method, packet radio system and controller**

(57)     An admission control method, packet radio system and controller. The packet radio system comprises at least one HSDPA (High Speed Downlink Packet Access) capable user terminal and at least one controller configured to control admission of user terminals to given channels. The controller comprises a processing unit configured to determine a reference value on the basis of HSDPA channel information of the packet radio system, to compare the determined reference value with the value of the user bit rate of the packet radio system, to map the user terminal to an HSDPA channel when the reference value is greater than or the same as the user bit rate, and to map the user terminal to a Dedicated Control Channel, DCH, when the reference value is smaller than the user bit rate.

Fig. 2

EP 1 633 160 A1

**Description**

**Field**

The invention relates to an admission control method in a packet radio system, to a packet radio system and to a controller in a packet radio system.

**Background**

HSDPA (high speed downlink packet access) is a concept that has been introduced for Release 5 in the ongoing standardisation work in WCDMA (Wideband Code Division Multiple Access) evolution in 3GPP (3rd Generation Partnership Project). The transport channel of HSDPA supports fast link adaptation (LA) where the bit rate is varied in each transmission time interval (TTI). HSDPA relies on the per-TTI adaptation of user data rate to match the instantaneous channel conditions. Accordingly, the corresponding functions, such as fast link adaptation, H-ARQ (Hybrid-Automatic Repeat reQuest) and fast packet scheduling, are located in the Node-B with easy access to air interface measurements. This differs from the Release '99 architecture where the packet scheduling and transport format selection functions are located in the RNC (Radio Network Controller).

Any HSDPA user terminal periodically sends a Channel Quality Indicator (CQI) report to the Node-B for indicating the currently supported data rate at a pre-specified packet error threshold of 10%. The CQI report indicates coding and modulation schemes and the number of multicodes the user terminal can support under current radio conditions. Further, the user terminal also sends an acknowledgement (ACK/NACK) message for each packet for informing the Node-B of when to initiate retransmissions. With channel quality measurements available for each user terminal in the cell, a packet scheduler may optimize the scheduling among the users.

Admission of users is done by admission control (AC) in the radio network controller (RNC). The user terminal sends a request to be admitted to the radio system, and the admission control decides if the current load situation in the radio system permits the user terminal to be admitted or not. If the load situation is such that the user terminal can be admitted, then admission control must decide whether the user terminal should be admitted to a DCH (Dedicated Traffic Channel) or to an HS-DSCH (High Speed-Downlink Shared Channel) (assuming that the user terminal is HSDPA capable, otherwise the channel used must be a DCH channel). Detailed information about how the resources allocated for HSDPA are used is only available in the Node-B. Thus, it is not always optimal to map the new user terminal to an HS-DSCH channel even when the user terminal is HSDPA capable. Thus, there is a need for robust admission control and channel mapping solutions in situations described above.

**Brief description of the invention**

An object of the invention is to provide an improved packet radio system, an improved controller and an improved method of admission control. According to an aspect of the invention, there is provided an admission control method in a packet radio system, the method comprising receiving, by a controller, an admission request from a HSDPA (High Speed Downlink Packet Access) capable user terminal. The method further comprises determining a ref erence value on the basis of HSDPA channel information of the packet radio system, comparing the determined reference value with the value of the user bit rate of the packet radio system, mapping the user terminal to an HSDPA channel when the reference value is greater than or the same as the user bit rate, and mapping the user terminal to a Dedicated Control Channel, DCH, when the reference value is smaller than the user bit rate.

According to an aspect of the invention, there is provided a packet radio system, comprising: at least one HSDPA (High Speed Downlink Packet Access) capable user terminal including a transceiver configured to send an admission request, and at least one controller configured to control admission of user terminals to given channels used by the packet radio system, the controller including a receiver configured to receive the admission request from the user terminal. The controller further comprises a processing unit configured to determine a reference value on the basis of HSDPA channel information of the packet radio system, to compare the determined reference value with the value of the user bit rate of the packet radio system, to map the user terminal to an HSDPA channel when the reference value is greater than or the same as the m user bit rate, and to map the user terminal to a Dedicated Control Channel, DCH, when the reference value is smaller than the user bit rate.

According to another aspect of the invention, there is provided a controller in a packet radio system, the controller controlling admission of at least one HSDPA (High Speed Downlink Packet Access) user terminals to given channels used by the packet radio system, the controller comprising a receiver configured to receive an admission request from the user terminal. The controller further comprises a processing unit configured to determine a reference value on the basis of HSDPA channel information of the packet radio system, to compare the determined reference value with the value of the user bit rate of the packet radio system, to map the user terminal to an HSDPA channel when the reference value is greater than or the same as the user bit rate, and to map the user terminal to a Dedicated Control Channel, DCH, when the reference value is smaller than the user bit rate.

According to an aspect of the invention, there is provided a packet radio system comprising at least one HSDPA (High Speed Downlink Packet Access) capable user terminal including communication means for sending an admission request, and at least one controller for controlling admission of the user terminal to given channels used by the packet radio system, the controller including communication means for receiving the admission request from the user terminal. The controller further comprises determining means for determining a reference value on the basis of HSDPA channel information of the packet radio system, comparing means for comparing the determined reference value with the value of the user bit rate of the packet radio system, mapping means for mapping the user terminal to an HSDPA channel when the reference value is greater than or the same as the user bit rate, and for mapping the user terminal to a Dedicated Control Channel, DCH, when the reference value is smaller than the user bit rate.

According to another aspect of the invention, there is provided a controller in a packet radio system, the controller controlling admission of at least one HSPDA (High Speed Downlink Packet Access) user terminals to given channels used by the packet radio system, the controller comprising communication means for receiving an admission request from the user terminal. The controller further comprises determining means for determining a reference value on the basis of HSDPA channel information of the packet radio system, comparing means for comparing the determined reference value with the value of the user bit rate of the packet radio system, mapping means for mapping the user terminal to an HSDPA channel when the reference value is greater than or the same as the user bit rate, and for mapping the user terminal to a Dedicated Control Channel, DCH, when the reference value is smaller than the user bit rate.

The invention provides several advantages. HSDPA channel user bit rate is taken into account in admission control. Thus, users are assigned to channels where they can get optimum bit rates.

**List of drawings**

In the following, the invention will be described in greater detail with reference to the embodiments and the accompanying drawings, in which

Figure 1 is a simplified block diagram illustrating the structure of a packet radio system;
Figure 2 shows another example of a packet radio system, and
Figure 3 shows an embodiment of the method of admission control in a packet radio system.

**Description of embodiments**

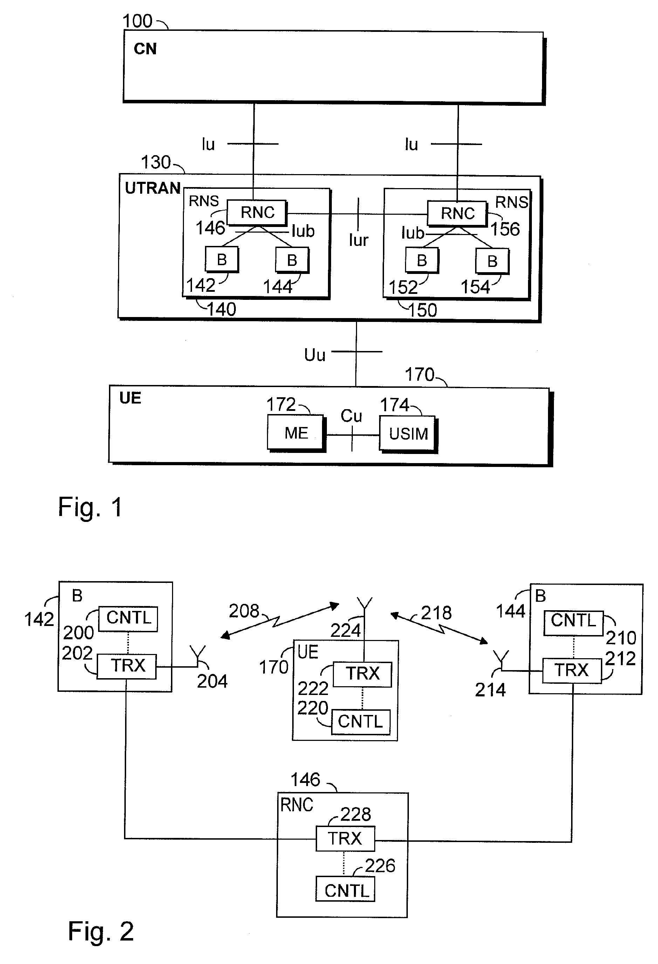

With reference to Figure 1, let us examine an example of a radio system in which the preferred embodiments of the invention can be appl ied. A packet radio system in Figure 1, known at least as UMTS (Universal Mobile Telecommunications System) and IMT-2000 (International Mobile Telecommunications 2000), represents the third-generation radio systems. The embodiments are, however, not restricted to these systems described by way of example, but a person skilled in the art can also apply the instructions to other radio systems containing corresponding characteristics.

Figure 1 is a simplified block diagram, which shows the most important parts of a packet radio system and the interfaces between them at network-element level. The structure and functions of the network elements are not described in detail, because they are generally known.

The main parts of a packet radio system are a core network (CN) 100, a radio access network 130 and user terminal (UE) 170. The term UTRAN is short for UMTS Terrestrial Radio Access Network, i.e. the radio access network 130 belongs to the third generation and is implemented by wideband code division multiple access (WCDMA) technology. The main elements of the UTRAN are radio network controller (RNC) 146, 156, Node-Bs 142, 144, 152, 154 and user terminal 170. The UTRAN is attached to the existing GSM core network 100 via an interface, called lu. This interface is supported by the RNC 146, 156, which manages a set of base stations called Node-Bs 142, 144, 152, 154 through interfaces called lub. The UTRAN is largely autonomous from the core network 100 since the RNCs 146, 156 are interconnected by the lur interface.

From the point of view of Node-B 142, 144, 152, 154, i.e. base station, there is one controlling RNC 146, 156, where its lub interface terminates. The controlling RNC 146, 156 also takes care of admission control for new mobiles or services attempting to use the Node-B 142, 144, 152, 154. The controlling RNC 146, 156 and its Node-Bs 142, 144, 152, 154 form an RNS (Radio Network Subsystem) 140, 150.

The user terminal 170 may comprise mobile equipment (ME) 172 and UMTS subscriber identity module (USIM) 174. USIM 174 contains information related to the user and information related to information security in particular, for instance, an encryption algorithm. In UMTS networks, the user terminal 170 can be simultaneously connected to a plurality of Node-Bs in occurrence of soft handover.

From the point of view of the user terminal 170, there is one serving RNC 146, 156 that terminates the mobiles link layer communications. From the core network 100 point of view, the Serving RNC 146, 156 terminates the lu for this user terminal 170. The Serving RNC 146, 156 also exerts admission control for new mobiles or services attempting to use the core network 100 over its lu interface. Admission control ensures that mobiles are only allocated those radio resources (bandwidth and signal/noise ratio) that the network has available.

In UMTS, the most important interfaces between network elements are the lu interface between the core network 100 and the radio access network 130, and the Uu interface between the radio access network and the user terminal.

In the following, a packet radio system will be described by means of Figure 2. Figure 2 shows a part of a simplified packet radio system that comprises user terminal 170, two base stations 142, 144 and a radio network controller 146. The first base station 142 comprises a transceiver 202, an antenna 204 and a processing unit 200. Likewise, the second base station 144 comprises a transceiver 212, an antenna 214 and a processing unit 210. The radio network controller 146 also comprises a transceiver 228 and a processing unit 226. The user terminal 170 comprises a transceiver 222 and an antenna 224 for establishing a radio connection and a processing unit 220.

In the existing radio systems, wireless telecommunications connections are established by a user terminal and base stations which communicate with one another on a radio connection, i.e. calls or data transmission connections between different user terminals are established via base stations. This is illustrated in Figure 2 by radio connections 208, 218.

The processing units 200, 210, 220, 226 refer to blocks controlling the functions of the device and are nowadays usually implemented as a processor and its software, but various hardware solutions are also feasible, e.g. a circuit built from logic components or one or more application-specific integrated circuits, ASIC. A hybrid of these different implementations is also feasible.

The user terminal 170 is HSDPA (High Speed Downlink Packet Access) capable, and the transceiver 222 of the user terminal 170 is configured to send admission requests for obtaining admittance to radio channels used by the packet radio system. The radio network controller 146 is configured to control admission of the user terminal 170 to given channels used by the packet radio system, and the transceiver 228 of the radio network controller 146 is configured to receive the admission requests from the user terminal 170.

In an embodiment, the processing unit 226 of the radio network controller 146 is configured to determine a reference value on the basis of HSDPA channel information of the packet radio system and to compare the determined reference value with a value of a user bit rate of the packet radio system. The reference value is in relation to an average HSDPA user bit rate of the packet radio system, for example. Based on the comparison, the processing unit 226 of the radio network controller 146 is configured to map the user terminal 170 to an HSDPA channel if the reference value is greater than or the same as the value of the user bit rate. On the other hand, the radio network controller 146 is configured to map the user terminal 170 to a Dedicated Control Channel, DCH, when the reference value is smaller than the value of user bit rate.

In an embodiment, the radio network controller 146 is configured to determine the reference value, based on the HSDPA channel information comprising at least one of the values of the total power used for HSDPA channels of the packet radio system, the power allocated for HSDPA channels, the total HSDPA channel throughput of the radio system, and the number of admitted HSDPA channel users.

In an embodiment, an average HSDPA user bit rate in the cell concerned is taken into account when making the admission decision for an HSDPA user terminal 170. The Node-B 142, 144 periodically reports the total power used for HSDPA, that is, for the control and the transport channels (HS-SCCH (High Speed-Shared Control Channel) and HS-DSCH (High Speed-Downlink Shared Channel)), and the throughput for each SPI (Scheduling Priority Indicator) class. Thus, the total HSDPA cell throughput is known at the RNC 146. This information is used when performing admission control. In an embodiment, the following equation 1 may be used when determining the reference value:

$$\frac{TH}{1+N}\frac{P_{allocated}}{P_{used}}k \geq R_{\min} \tag{1}$$

where:

TH is the total HSDPA throughput (summing over all SPI),
N is the number of HSDPA users already admitted to the cell,
$P_{allocated}$ is the power allocated for HSDPA,
$P_{used}$ is the power currently used for HSDPA,
k is a weight factor ($\leq 1$) and possible parameter to be adjusted by the operator, and
$R_{\min}$ is the user bit rate.

Thus, the reference value may be determined by calculating a product of a quotient of the total HSDPA channel throughput and the sum of one and the number of admitted HSDPA channel users, and a quotient of the power allocated for HSDPA channels and the total power used for HSDPA channels. Further, the product may be multiplied by an adjustable weight factor that is smaller than or equal to one.

A scheduler used in the Node-B 142, 144 does not necessarily guarantee the same bit rate for all user terminals. In order to guarantee a minimum bit rate, the reported bit rate can be offset by the factor k. In case the scheduler in the Node-B 142, 144 is a fair throughput scheduler that gives all users the same bit rate, then k may have the value 1. When the criterion described in equation 1 is fulfilled, the user terminal 170 will be mapped to HSDPA channel. Otherwise the user terminal 170 will be mapped to DCH channel.

In an embodiment, the user bit rate, $R_{min}$, is the minimum guaranteed user bit rate of the packet radio system, for example the minimum guaranteed HSDPA channel user bit rate. It is also possible that $R_{min}$ is the guaranteed and/or minimum bit rate on a DCH channel. Another possibility is that $R_{min}$ is the measured bit rate on DCH channels. Then with the factor k of equation 1, it can be controlled how much higher the bit rate on HSDPA should be.

The power used for HSDPA channel, i.e. $P_{used}$, is calculated by subtracting the power used by non-HSDPA resources of the packet radio system from the total power used by the packet radio system, for example. The power ratio between the allocated and the used powers makes a rough estimation of the additional throughput the cell could support if there is data available to transmit continuously.

Equation 1 presented above may be further modified to represent a specific SPI (Scheduling Priority Indicator), that is, the necessary power per priority class to meet the guaranteed bit rate of this priority class. Thus, admission control may be performed for each SPI instead of using one expression for all HSDPA users in a specific cell. If an expression for each SPI is used, then $\mathbf{TH}_{SPI}$ and $R_{min,SPI}$ for the corresponding SPI can be used instead of TH and $R_{min}$.

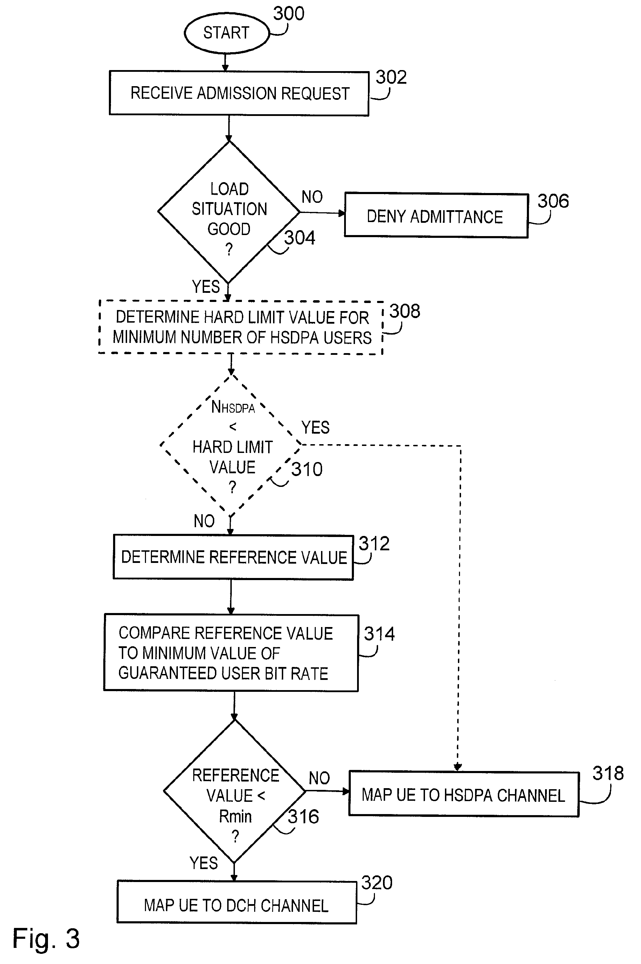

Figure 3 shows an embodiment of the method of admission control in a packet radio system. The broken lines in Figure 3 denote alternative method steps.

The method starts in 300. In 302, an admission request from an HSDPA (High Speed Downlink Packet Access) capable user terminal is received by a controller. If, in 304, it is detected that the load situation in the radio network is good, then 308 or 312 is entered. Otherwise, 306 is entered where admittance is denied for the user terminal.

In an embodiment, it is possible to determine a hard limit value for the minimum value of the number of admitted HSDPA channel users before determining the reference value in 312. The hard limit value for the minimum number of HSDPA channel users is determined in 308. If, in 310, it is detected that the number of HSDPA users is smaller than the hard limit value, 318 is entered where the user terminal is mapped to HSDPA channel. This is done because a certain minimum number of users are needed in HSDPA to facilitate a multi-user diversity gain. If the number of HSDPA users is larger than the hard limit, the method will proceed to 312 - 316 for selecting the HS-DSCH or DCH channel for the user terminal, for example. Using the hard limit value will prevent situations where the user terminal is not allocated to HSDPA channels in some special cases where the current number of HSDPA users is very small. For example, if only one HSDPA user is in the cell and the user is at the edge of the cell, the total HSDPA throughput will be very low but the power used for HSDPA may be quite high. In this case, the user terminal may not be allowed to use HSDPA channel when the channel type is selected between HSDPA and DCH channels.

In 312, the reference value is determined. The reference value is in relation to an average HSDPA user bit rate of the packet radio system, for example. The reference value is based on the HSDPA channel information comprising, for example, the values of the total power used for HSDPA channels of the packet radio system, the power allocated for HSDPA channels, the total HSDPA channel throughput of the radio system, and the number of admitted HSDPA channel users.

In 314, the reference value is compared to the minimum value of the guaranteed user bit rate. If, in 316, it is detected that the reference value is greater than or the same as the minimum value of the guaranteed HSDPA channel user bit rate, then 318 is entered and the user terminal is mapped to HSDPA channel. If, in 316, it is detected that the reference value is smaller than the minimum value of the guaranteed HSDPA channel user bit rate, then 320 is entered and the user terminal is mapped to DCH channel.

Even though the invention is described above with reference to an example according to the accompanying drawings, it is clear that the invention is not restricted thereto but it can be modified in several ways within the scope of the appended claims.

## Claims

1. An admission control method in a packet radio system, the method comprising receiving, by a controller, an admission request from an HSDPA (High Speed Downlink Packet Access) capable user terminal, **characterized by** the method further comprising:

determining a reference value on the basis of HSDPA channel information of the packet radio system;
comparing the determined reference value with a value of a user bit rate of the packet radio system;
mapping the user terminal to an HSDPA channel when the reference value is greater than or the same as the user bit rate; and
mapping the user terminal to a Dedicated Control Channel, DCH, when the reference value is smaller than the user bit rate.

**2.** The method of claim 1, **characterized by** determining the reference value to be in relation to an average HSDPA user bit rate of the packet radio system.

**3.** The method of claim 1, **characterized by** determining that the reference value is based on the HSDPA channel information comprising at least one of the values of:

the total power used for High Speed Downlink Packet Access, HSDPA, channels of the packet radio system,
the power allocated to HSDPA channels,
the total HSDPA channel throughput of the radio system, and
the number of admitted HSDPA channel users.

**4.** The method of claim 2, **characterized by** determining the reference value by calculating the product of:

the quotient of the total HSDPA channel throughput and the sum of one and the number of admitted HSDPA channel users; and
the quotient of the power allocated for HSDPA channels and the total power used for HSDPA channels.

**5.** The method of claim 4, **characterized by** determining the reference value further comprising multiplying the product of the quotient of the total HSDPA channel throughput and the sum of one and the number of admitted HSDPA channel users, and the quotient of the power allocated to HSDPA channels and the total power used for HSDPA channels by an adjustable weight factor, the adjustable weight factor being smaller than or equal to one.

**6.** The method of claim 5, **characterized by** the user bit rate being the measured user bit rate on a DCH channel, and the method comprising controlling the bit rate on an HSDPA channel by using the adjustable weight factor.

**7.** The method of claim 1, **characterized by** the user bit rate being the minimum guaranteed HSDPA channel user bit rate of the packet radio system.

**8.** The method of claim 1, **characterized by**, before determining the reference value the method further comprising:

determining a hard limit value for the minimum value of the number of admitted HSDPA channel users; and
mapping the user terminal to an HSDPA channel when the number of admitted HSDPA channel users is smaller than the hard limit value.

**9.** A packet radio system, comprising:

at least one HSDPA (High Speed Downlink Packet Access) capable user terminal including a transceiver configured to send an admission request; and
at least one controller configured to control admission of user terminals to given channels used by the packet radio system, the controller including a receiver configured to receive the admission request from the user terminal,

**characterized by** the controller further comprising a processing unit configured to determine a reference value on the basis of HSDPA channel information of the packet radio system, to compare the determined reference value with the value of the user bit rate of the packet radio system, to map the user terminal to an HSDPA channel when the reference value is greater than or the same as the user bit rate, and to map the user terminal to a Dedicated Control Channel, DCH, when the reference value is smaller than the user bit rate.

**10.** The packet radio system of claim 9, **characterized in that** the processing unit is configured to determine the reference value to be in relation to an average HSDPA user bit rate of the packet radio system.

11. The packet radio system of claim 9, **characterized in that** the processing unit is configured to determine the reference value based on the HSDPA channel information comprising at least one of the values of:

>   the total power used for HSDPA channels of the packet radio system,
>   the power allocated to HSDPA channels,
>   the total HSDPA channel throughput of the radio system, and
>   the number of admitted HSDPA channel users.

12. The packet radio system of claim 11, **characterized in that** the processing unit is further configured to determine the reference value by calculating the product of the quotient of the total HSDPA channel throughput and the sum of one and the number of admitted HSDPA channel users, and a quotient of the power allocated to HSDPA channels and the total power used for HSDPA channels.

13. The packet radio system of claim 12, **characterized in that** the processing unit is further configured to determine the reference value by multiplying the product of the quotient of the total HSDPA channel throug h-put and the sum of one and the number of admitted HSDPA channel users, and the quotient of the power allocated to HSDPA channels and the total power used for HSDPA channels by an adjustable weight factor, the adjustable weight factor being smaller than or equal to one.

14. The packet radio system of claim 13, **characterized by** the user bit rate being a measured user bit rate on a DCH channel, and the processing unit being further configured to control the bit rate on an HSDPA channel by using the adjustable weight factor.

15. The packet radio system of claim 9, **characterized by** the user bit rate being the minimum guaranteed HSDPA channel user bit rate of the packet radio system.

16. The packet radio system of claim 9, **characterized in that** before determining the reference value the processing unit is further configured to determine a hard limit value for the minimum value of the number of admitted HSDPA channel users, and to map the user terminal to an HSDPA channel when the number of admitted HSDPA channel users is smaller than the hard limit value.

17. A controller in a packet radio system, the controller controlling admission of at least one HSDPA (High Speed Downlink Packet Access) user terminals to given channels used by the packet radio system, the controller comprising a receiver configured to receive an admission request from the user terminal, **characterized by** the controller further comprising a processing unit configured to determine a reference value on the basis of HSDPA channel information of the packet radio system, to compare the determined reference value with the value of the user bit rate of the packet radio system, to map the user terminal to an HSDPA channel when the reference value is greater than or the same as the user bit rate, and to map the user terminal to a Dedicated Control Channel, DCH, when the reference value is smaller than the user bit rate.

18. The controller of claim 16, **characterized in that** the processing unit is configured to determine the reference value to be in relation to the average HSDPA user bit rate of the packet radio system.

19. The controller of claim 16, **characterized in that** the processing unit is configured to determine the reference value based on the HSDPA channel information comprising at least one of the values of: the total power used for HSDPA channels of the packet radio system, the power allocated to HSDPA channels, the total HSDPA channel throughput of the radio system, and the number of admitted HSDPA channel users.

20. The controller of claim 18, **characterized in that** the processing unit is further configured to determine the reference value by calculating the product of the quotient of the total HSDPA channel throughput and the sum of one and the number of admitted HSDPA channel users, and the quotient of the power allocated for HSDPA channels and the total power used for HSDPA channels.

21. A packet radio system comprising:

>   at least one HSDPA (High Speed Downlink Packet Access) capable user terminal including communication means for sending an admission request; and
>   at least one controller for controlling admission of the user terminal to given channels used by the packet radio system, the controller including communication means for receiving the admission request from the user terminal,

**characterized by** the controller further comprising:

determining means for determining a reference value on the basis of HSDPA channel information of the packet radio system;

comparing means for comparing the determined reference value with the value of the user bit rate of the packet radio system;

mapping means for mapping the user terminal to an HSDPA channel when the reference value is greater than or the same as the user bit rate, and for mapping the user terminal to a Dedicated Control Channel, DCH, when the reference value is smaller than the user bit rate.

22. A controller in a packet radio system, the controller controlling admission of at least one HSPDA (High Speed Downlink Packet Access) user terminals to given channels used by the packet radio system, the controller comprising communication means for receiving an admission request from the user terminal, **characterized in that** the controller further comprises:

determining means for determining a reference value on the basis of HSDPA channel information of the packet radio system;

comparing means for comparing the determined reference value with the value of the user bit rate of the packet radio system;

mapping means for mapping the user terminal to an HSDPA channel when the reference value is greater than or the same as the user bit rate, and for mapping the user terminal to a Dedicated Control Channel, DCH, when the reference value is smaller than the user bit rate.

**Amended claims in accordance with Rule 86(2) EPC.**

1. An admission control method in a packet radio system, the method comprising receiving, by a controller, an admission request from an HSDPA (High Speed Downlink Packet Access) capable user terminal, **characterized by** the method further comprising:

determining a reference value on the basis of HSDPA channel information of the packet radio system by calculating the product of: the quotient of the total HSDPA channel throughput and the sum of one and the number of admitted HSDPA channel users; and the quotient of the power allocated for HSDPA channels and the total power used for HSDPA channels;

comparing the determined reference value with a value of a user bit rate of the packet radio system;

mapping the user terminal to an HSDPA channel when the reference value is greater than or the same as the user bit rate; and

mapping the user terminal to a Dedicated Control Channel, DCH, when the reference value is smaller than the user bit rate.

2. The method of claim 1, **characterized by** determining the reference value to be in relation to an average HSDPA user bit rate of the packet radio system.

3. The method of claim 1, **characterized by** determining that the reference value is based on the HSDPA channel information comprising at least one of the values of:

the total power used for High Speed Downlink Packet Access, HSDPA, channels of the packet radio system, the power allocated to HSDPA channels,

the total HSDPA channel throughput of the radio system, and

the number of admitted HSDPA channel users.

4. The method of claim 1, **characterized by** determining the reference value further comprising multiplying the product of the quotient of the total HSDPA channel throughput and the sum of one and the number of admitted HSDPA channel users, and the quotient of the power allocated to HSDPA channels and the total power used for HSDPA channels by an adjustable weight factor, the adjustable weight factor being smaller than or equal to one.

**5.** The method of claim 4, **characterized by** the user bit rate being the measured user bit rate on a DCH channel, and the method comprising controlling the bit rate on an HSDPA channel by using the adjustable weight factor.

**6.** The method of claim 1, **characterized by** the user bit rate being the minimum guaranteed HSDPA channel user bit rate of the packet radio system.

**7.** The method of claim 1, **characterized by**, before determining the reference value the method further comprising:

determining a hard limit value for the minimum value of the number of admitted HSDPA channel users; and mapping the user terminal to an HSDPA channel when the number of admitted HSDPA channel users is smaller than the hard limit value.

**8.** A packet radio system, comprising:

at least one HSDPA (High Speed Downlink Packet Access) capable user terminal including a transceiver configured to send an admission request; and
at least one controller configured to control admission of user terminals to given channels used by the packet radio system, the controller including a receiver configured to receive the admission request from the user terminal,

**characterized by** the controller further comprising a processing unit configured to determine a reference value on the basis of HSDPA channel information of the packet radio system by calculating the product of:

the quotient of the total HSDPA channel throughput and the sum of one and
the number of admitted HSDPA channel users, and a quotient of the power allocated to HSDPA channels and the total power used for HSDPA channels, to compare the determined reference value with the value of the user bit rate of the packet radio system, to map the user terminal to an HSDPA channel when the reference value is greater than or the same as the user bit rate, and to map the user terminal to a Dedicated Control Channel, DCH, when the reference value is smaller than the user bit rate.

**9.** The packet radio system of claim 8, **characterized in that** the processing unit is configured to determine the reference value to be in relation to an average HSDPA user bit rate of the packet radio system.

**10.** The packet radio system of claim 8, **characterized in that** the processing unit is configured to determine the reference value based on the HSDPA channel information comprising at least one of the values of:

the total power used for HSDPA channels of the packet radio system,
the power allocated to HSDPA channels,
the total HSDPA channel throughput of the radio system, and
the number of admitted HSDPA channel users.

**11.** The packet radio system of claim 8, **characterized in that** the processing unit is further configured to determine the reference value by multiplying the product of the quotient of the total HSDPA channel throughput and the sum of one and the number of admitted HSDPA channel users, and the quotient of the power allocated to HSDPA channels and the total power used for HSDPA channels by an adjustable weight factor, the adjustable weight factor being smaller than or equal to one.

**12.** The packet radio system of claim 11, **characterized by** the user bit rate being a measured user bit rate on a DCH channel, and the processing unit being further configured to control the bit rate on an HSDPA channel by using the adjustable weight factor.

**13.** The packet radio system of claim 8, **characterized by** the user bit rate being the minimum guaranteed HSDPA channel user bit rate of the packet radio system.

**14.** The packet radio system of claim 8, **characterized in that** before determining the reference value the processing unit is further configured to determine a hard limit value for the minimum value of the number of admitted HSDPA channel users, and to map the user terminal to an HSDPA channel when the number of admitted HSDPA channel users is smaller than the hard limit value.

**15.** A controller in a packet radio system, the controller controlling admission of at least one HSDPA (High Speed Downlink Packet Access) user terminals to given channels used by the packet radio system, the controller comprising a receiver configured to receive an admission request from the user terminal, **characterized by** the controller further comprising a processing unit configured to determine a reference value on the basis of HSDPA channel information of the packet radio system by calculating the product of: the quotient of the total HSDPA channel throughput and the sum of one and the number of admitted HSDPA channel users, and the quotient of the power allocated for HSDPA channels and the total power used for HSDPA channels, to compare the determined reference value with the value of the user bit rate of the packet radio system, to map the user terminal to an HSDPA channel when the reference value is greater than or the same as the user bit rate, and to map the user terminal to a Dedicated Control Channel, DCH, when the reference value is smaller than the user bit rate.

**16.** The controller of claim 15, **characterized in that** the processing unit is configured to determine the reference value to be in relation to the average HSDPA user bit rate of the packet radio system.

**17.** The controller of claim 15, **characterized in that** the processing unit is configured to determine the reference value based on the HSDPA channel information comprising at least one of the values of: the total power used for HSDPA channels of the packet radio system, the power allocated to HSDPA channels, the total HSDPA channel throughput of the radio system, and the number of admitted HSDPA channel users.

Fig. 1

Fig. 2

```
              ( START )  ⌐ 300
                  │
                  ▼
        ┌──────────────────────┐ ⌐ 302
        │ RECEIVE ADMISSION REQUEST │
        └──────────────────────┘
                  │
                  ▼
              ◇ LOAD          NO      ┌──────────────────┐ ⌐ 306
              SITUATION ─────────────▶│ DENY ADMITTANCE  │
                GOOD                  └──────────────────┘
                 ?  ⌐ 304
                  │
                 YES
                  ▼
        ┌ ─ ─ ─ ─ ─ ─ ─ ─ ─ ─ ─ ─ ┐ ⌐ 308
          DETERMINE HARD LIMIT VALUE FOR
        │ MINIMUM NUMBER OF HSDPA USERS │
        └ ─ ─ ─ ─ ─ ─ ─ ─ ─ ─ ─ ─ ┘
                  │
                  ▼
              ◇ N_HSDPA
                  <          YES
              HARD LIMIT ─ ─ ─ ─ ─ ─ ─ ─ ─ ─ ┐
                VALUE  ⌐ 310                  ┊
                 ?                            ┊
                  │                           ┊
                 NO                           ┊
                  ▼                           ┊
        ┌──────────────────────┐ ⌐ 312       ┊
        │ DETERMINE REFERENCE VALUE │         ┊
        └──────────────────────┘             ┊
                  │                           ┊
                  ▼                           ┊
        ┌──────────────────────┐ ⌐ 314       ┊
        │ COMPARE REFERENCE VALUE │           ┊
        │ TO MINIMUM VALUE OF     │           ┊
        │ GUARANTEED USER BIT RATE│           ┊
        └──────────────────────┘             ┊
                  │                           ▼
                  ▼                  ┌──────────────────────┐ ⌐ 318
              ◇ REFERENCE   NO       │ MAP UE TO HSDPA CHANNEL │
                VALUE < ────────────▶└──────────────────────┘
                 Rmin  ⌐ 316
                  ?
                  │
                 YES
                  ▼
        ┌──────────────────────┐ ⌐ 320
        │ MAP UE TO DCH CHANNEL │
        └──────────────────────┘
```

Fig. 3

**EP 1 633 160 A1**

European Patent
Office

**EUROPEAN SEARCH REPORT**

Application Number

EP 04 10 4296

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KOLDING TE. ET ALL: "high speed downlink packet access wcdma evolution" IEEE VEHICULAR TECHNOLOGY SOCIETY NEWS, February 2003 (2003-02), pages 4-10, XP002319129 * the whole document * | 1-22 | H04Q7/38 H04L12/56 |
| A | BUEHRER M.: "radio resource Management in 3g CDMA" MOBILE AND PORTABLE RADIO RESEARCH GROUP, pages 1-83, XP002319130 Retrieved from the Internet: URL:http://www.mprg.org/Tech_xfer/ppt/Bueh rerRadioResourceManagementTutorial.pdf> * the whole document * | 1-22 | |
| A | "admission control strategy and scheduling algorithms for downlimk packet transmission in WCDMA" IEEE VTC, 2000, pages 674-680, XP010525465 * page 676, paragraph 3 - page 677, paragraph 3.2 * | 1-22 | TECHNICAL FIELDS SEARCHED (Int.Cl.7) |
| A | "wcdma evolved- high speed packet-data services" ERICSSON REVIEW NO. 2, 2003, pages 56-65, XP002319132 * the whole document * | 1-22 | H04Q H04L |
| A | "3rd generation partnership project; technical specification group radio access network; Radio interface protocol architecture" 3GPP TS 25301 VERSION 6.0.0 RELEASE 6, 1 December 2003 (2003-12-01), pages 1-43, XP002319133 * the whole document * | 1-22 | |

The present search report has been drawn up for all claims

| Place of search | Date of completion of the search | Examiner |
|---|---|---|
| Berlin | 17 March 2005 | M. García |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................

& : member of the same patent family, corresponding document

EPO FORM 1503 03.82 (P04C01)